# EUROPEAN PATENT APPLICATION

(11) **EP 1 615 113 A2**
(43) Date of publication of application: **11.01.2006**
(21) Application number: 05006279.3
(22) Date of filing: 22.03.2005
(51) Int. Cl.: G06F 3/033

(54) **User interface of electronic apparatus and method for controlling the user interface**

(30) Priority: 29.03.2004 JP 2004095806
(71) Applicant: Orion Electric Company, LTD., Takefu-shi, Fukui-ken (JP)
(72) Inventor: Aoki, Hirotsugu, Takefu-shi, Fukui-ken (JP)
(74) Representative: Kirschner, Klaus Dieter

(57) **Abstract**

It is an object of the present invention to provide a user interface of an electronic apparatus capable of ensuring better operability and greater convenience and a method for controlling the user interface. A user interface of an electronic apparatus of this invention includes a key discrimination unit that discriminates an input key; a first storage unit that stores a latest screen display item; a second storage unit that sequentially stores a series of operation keys with a "confirmation key" set as an index, and that reads the operation keys in a reverse chronological order; an image control unit that displays a screen based on a storage content of the first storage unit; and a management unit that, if the input key is a "previously set item call key", reads the series of operation keys up to a latest "confirmation key" depression from the second storage unit, and that causes the image control unit to display a screen at a time of the "confirmation key" depression as well as the storage content of the first storage unit.

## Description

The present invention relates to a user interface of an electronic apparatus and a method for controlling the user interface. More specifically, the present invention is suited for a home electronic apparatus such as a DVD recorder, a VCR recorder, a HDD recorder, a channel server or a cellular telephone.

In an electronic apparatus such as a DVD recorder, a remote control commander (hereinafter, simply "remote controller") and a menu screen are used as a user interface for performing various operations and settings.

As this menu screen, one having a hierarchical structure is normally employed because of a need to minutely setting lots of items, and setting items in lower layers are sequentially selected for a setting item in higher layers.

Some items in lower layers of the hierarchical menu are set quite frequently. However, to access contents of such setting items, it is required to repeatedly perform a setting operation from the highest layer. A user feels irritated with cumbersomeness of the repeated setting operation.

Likewise, interfaces of the other electronic apparatuses are often required to perform the setting operation repeatedly. The interfaces have, therefore, disadvantages of poor operability and less convenience.

To solve these disadvantages, a technique for displaying an operation item in a lower layer of a menu according to a usage frequency of the item (see Japanese Patent Application Laid-Open JP-A No. 9-2382911, JP-A No. 5-300445 and JP-A No. 2001-2684653), a technique for moving a set item to a sub menu (see JP-A No. 5-300445), and the like are proposed. With these techniques, however, the operation is inevitably started at a main menu screen, so that the disadvantage of the cumbersomeness of the repeated setting operation cannot be solved.

It is, therefore, an object of the present invention to provide a user interface of an electronic apparatus capable of ensuring better operability and greater convenience and a method for controlling the user interface.

According to one aspect of the present invention, there is provided a user interface of an electronic apparatus comprising: a key discrimination unit that discriminates an input key; a first storage unit that stores a latest screen display item; a second storage unit that sequentially stores a series of operation keys with a "confirmation key" set as an index, and that reads the operation keys in a reverse chronological order; an image control unit that displays a screen based on a storage content of the first storage unit; and a management unit that, if the input key is a "previously set item call key", reads the series of operation keys up to a latest "confirmation key" depression from the second storage unit, and that causes the image control unit to display a screen at a time of the latest "confirmation key" depression as well as the storage content of the first storage unit.

According to a second aspect of the present invention, there is provided a method for controlling a user interface, the method comprising steps of: discriminating an input key; reading a latest screen display item from a first storage unit that stores the latest screen display item if the input key is a "previously set item call key"; reading a series of operation keys sequentially stored in a second storage unit with a "confirmation key" set as an index in a reverse chronological order; and displaying a screen at a point of a last "confirmation key" depression based on data read from the first storage unit and the second storage unit.

According to the present invention, the key operations are sequentially stored with the "confirmation key" set as an index, and a setting operation can be promptly moved to a previously set item in a lower layer without repeatedly making selection over many menu layers by operating the previously set item call key. The present invention can, therefore, simplify the setting operation and improve the convenience.

Preferred embodiments of the invention are characterized in the sub-claims.

Embodiments of the invention are now described with reference to the drawings in which:
Fig. 1 is a block diagram that depicts a configuration of a user interface of an electronic apparatus according to one embodiment of the present invention;
Fig. 2 is a flowchart that depicts operations performed when an ordinary menu screen is set;
Fig. 3 is a flowchart that depicts operation performed when a "previously set item call key" is operated;
Fig. 4 is an explanatory view that depicts a change of a menu screen during a setting processing using an ordinary setup menu; and
Fig. 5 is an explanatory view that depicts a change of the menu screen when the "previously set item call key" is operated.

One embodiment of the present invention will be described hereinafter in detail with reference to the accompanying drawings. An instance of using a DVD recorder as an electronic apparatus according to the present invention will be described.

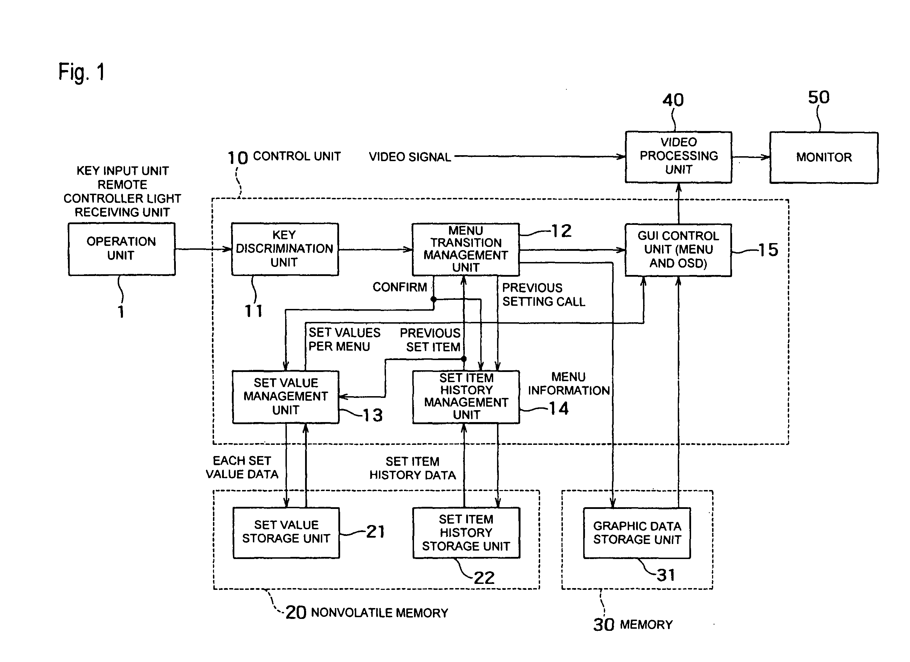

Fig. 1 is a block diagram that depicts menu screen-related configuration and functions of a user interface according to one embodiment of the present invention.

An operation unit 1 represents a key input unit and a remote controller light receiving unit which are provided on a panel surface of, for example, a DVD recorder. Normally, a remote controller using an infrared signal is most frequently employed as the operation unit 1. In response to reception of a key input signal by operating a key provided on a front panel surface of the DVD recorder or a remote controller signal, the operation unit 1 transmits the received signal to a key discrimination unit 11 included in a control unit 10. The control unit 10 indicated by a broken line in Fig. 1 is realized as functions executed by a microcomputer.

The key discrimination unit 11 translates or interprets the signal received from the operation unit 1, discriminates which key is the operated key, and transmits discrimination information to a menu transition management unit 12. The menu transition management unit 12 manages menu transition according to the key discrimination information. As will be described later, a "previously set item call key" is provided on the operation unit 1 such as the remote controller. When this "previously set item call key" is operated, a processing is performed differently from when the other keys are operated according to a special sub-routine to be described later.

The menu transition management unit 12 manages the menu transition based on the input key discrimination information. Namely, if the key discrimination information accompanies a change of a display screen, the menu transition management unit 12 transmits information on the change of the display screen to a GUI control unit 15. If the key discrimination information accompanies settings on a menu screen, the menu transition management unit 12 transmits information on the settings to a set value management unit 13 and a set item history management unit 14.

If the key discrimination information is information on calling of a previously set item, the menu transition management unit 12 transmits the key information on the previously set item to the set item history management unit 14.

If the operated key is a "confirmation key" such as ENTER key for confirming a set item, the set value management unit 13 stores a set value set by the "confirmation key" in a set value storage unit 21 provided in a nonvolatile memory 20. As a result, one pair of latest set value is stored in the set value storage unit 21. The set value stored in this set value storage unit 21 is transmitted to the GUI control unit 15 through the set value management unit 13 for screen display.

The GUI control unit 15 transmits on-screen display ("OSD") control information for displaying controls over display in a displayed menu and various pieces of message information therein on a screen, to a video processing unit 40. The video processing unit 40 combines a video signal with a signal output from the GUI control unit 15, and displays the combined signal on a monitor 50.

In the signal supplied to the menu transition management unit 12, graphic data that constitutes the menu is stored in a graphic data storage unit 31 provided in a memory 30 and fetched by the GUI control unit 15 if it is necessary to do so.

The set item history management unit 14 successively stores all pieces of input key operation information in a set item history storage unit 22 provided in the nonvolatile memory 20 at time series. This set item history storage unit 22 is a last-in first-out ("LIFO") type memory and designed so that pieces of stored data starting at the latest data can be fetched in a reverse chronological order. Further, the input key operation information of the "confirmation key" transmitted from the key discrimination unit 11 is stored as a special key for fetching the stored data from the set item history storage unit 22.

A state of the menu opened when the "confirmation key" is depressed and including cursor information can be stored in the nonvolatile memory 20.

As a result, when the "previously set item call key" is depressed, the set item history management unit 14 fetches, as set item history data, a history of the key operation since a present set state to a time of a latest "confirmation key" depression from the set item history storage unit 22.

Using this set item history data as well as the present set value data stored in the set value storage unit 21 and read by the set value management unit 13, the GUI control unit 15 can reproduce the menu screen at the time of the latest "confirmation key" depression.

A user can thereby return the screen to the setting screen at the time of the latest confirmation even if the menu is a menu having the hierarchical structure, thereby making it possible to facilitate and simplify the setting operation.

Alternatively, a series of "previously set item call keys" may be provided, and a history storage unit which pays attention to specific set items may be provided to correspond to the plural "previously set item call keys". For example, if a series of "previously set item call keys" are provided for high usage frequency set items such as a timer reservation, a setting of a videotape recording mode during videotape recording or a setting of a transfer rate, and an input switchover so that a latest setting content can be instantaneously called, convenience of the DVD recorder can be considerably improved.

Further, the "previously set item call key" is not always an independent key but may be used to select a previously set item call function by a combination of an ordinary function key and a specific key.

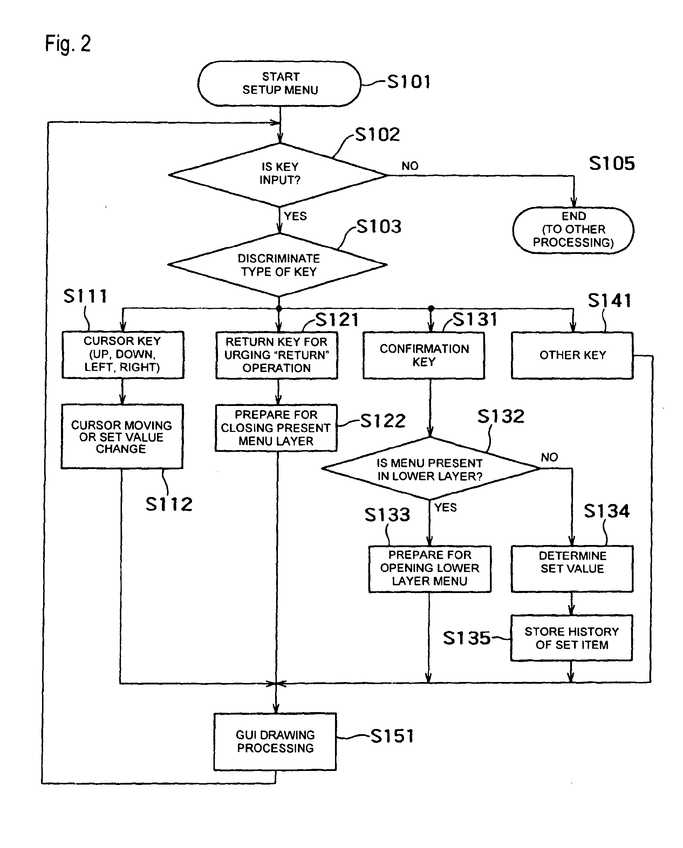

Fig. 2 is a flowchart that depicts operations for setting an ordinary menu screen using the configuration stated above.

When a setup menu is started (at a step S101), the key discrimination unit 11 monitors whether a key is constantly input within a predetermined cycle time. If the key is not input for a certain period of time, a setting processing is finished (at a step S105).

If the key is input, a type of the key is discriminated (at a step S103). If the input key is a cursor key (at a step S111), a moving indication to move the cursor by an indication to move the cursor up, down, left or right or a change indication to change a set value by an increment or a decrement of a numeral in the item is issued to the GUI control unit 15 (at a step S112). In response to the indication, the GUI control unit 15 performs a drawing processing (at a step S151).

If the input key is a RETURN key for urging an operation of returning to a previous key input state (at a step S121), then a preparation for closing a currently displayed menu layer is made (at a step S112), and the GUI control unit 15 performs the drawing processing when the currently displayed menu layer is closed (at a step S151).

Further, if the input key is the "confirmation key" (at a step S131), it is determined whether a lower-layer menu is present for the present set item (at a step S132). If the lower-layer menu is present, then a preparation for opening the lower-layer menu is made (at a step S133), and the GUI control unit 15 performs the drawing processing for drawing a state in which the lower-layer menu is opened (at the step S151). If no lower-layer menu is present, a present input value is set as the set value (at a step S134). In addition, this set value is stored in the set value storage unit 21, a history of the set item is stored in the set item history storage unit 22, and the GUI control unit 15 performs the drawing processing for a content of the present set value (at the step S151).

As already described, the set item history storage unit 22 stores the content of the key operation information whenever a key is input. If the input key is the "confirmation key", the set item history storage unit 22 stores the "confirmation key" also as an index. Alternatively, contents of a series of key inputs from a key input next to a certain "confirmation key" input until a next "confirmation key" input may be temporarily stored in a buffer or a register (not shown), and the series of key inputs may be stored in the set item history storage unit 22 as a pair of key input sequence with the next "confirmation key" input used as an index.

As for the set item history data stored in this set item history storage unit 22, the "previously set item call key" provided on the remote controller or operation unit 1 is operated, whereby a menu setting screen at a time of the latest "confirmation key" depression can be called.

After the step S151, the processing returns to the step S102 and the operations are repeatedly executed for a predetermined time until it is monitored that a key is not input.

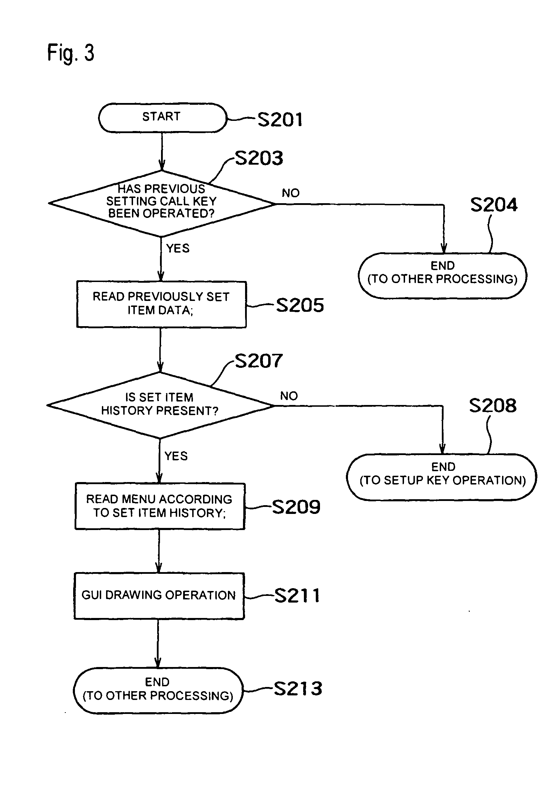

Next, operations performed when the "previously set item call key" is operated will be described with reference to a flowchart of Fig. 3.

When a processing is started (at a step S201), the key discrimination unit 11 monitors whether the "previously set item call key" has been operated (at a step S203). When the operation of the "previously set item call key" is not detected within a predetermined monitoring time, this processing is finished and the other processing follows if it is necessary to do so (at a step S204).

If it is detected that the "previously set item call key" has been operated, the menu transition management unit 12 indicates the set item history management unit 14 to read the set item history data and the present set item data so as to read the set item data at the time of previous "confirmation key" depression (at a step S205).

The set item history management unit 14 accesses the set item history storage unit 22 and confirms whether the set item history data is present in the unit 22 (at a step S207). If the set item history data is not present, the processing is finished and the ordinary setting operation follows (at a step S208).

If the set item history storage unit 22 stores the set item history data since the present state until the previous "confirmation key" operation time, the set item history management unit 14 fetches this set item history data. In addition, the set item history management unit 14 reads set values of present menu setting items from the set value storage unit 21 through the set value management unit 13 (at a step S209), and transmits the set values to the GUI control unit 15 so as to cause the GUI control unit 15 to perform the drawing processing to reproduce the setting screen at the previous "confirmation key" operation time (at a step S211). When the GUI control unit 15 finishes the drawing operation, then this routine is finished (at a step S213) and the other processing follows. A typical example of this other processing is a processing for making settings for the content of the displayed menu, i.e., a change processing for changing set items on the ordinary menu. In this change processing, a reset item history is stored in the set item history storage unit 22 with the "confirmation key" input used as an index, as already described with reference to Fig. 2.

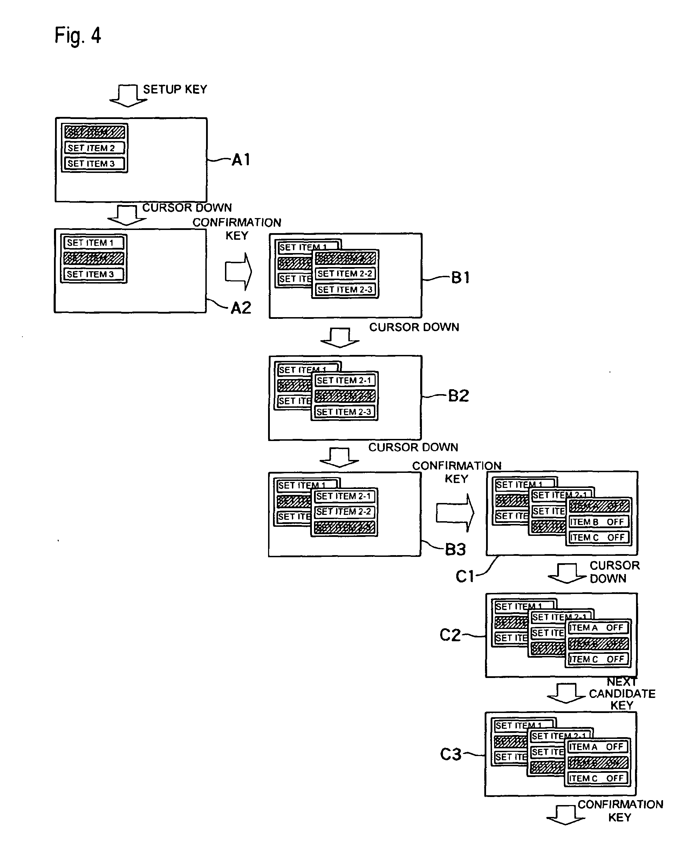

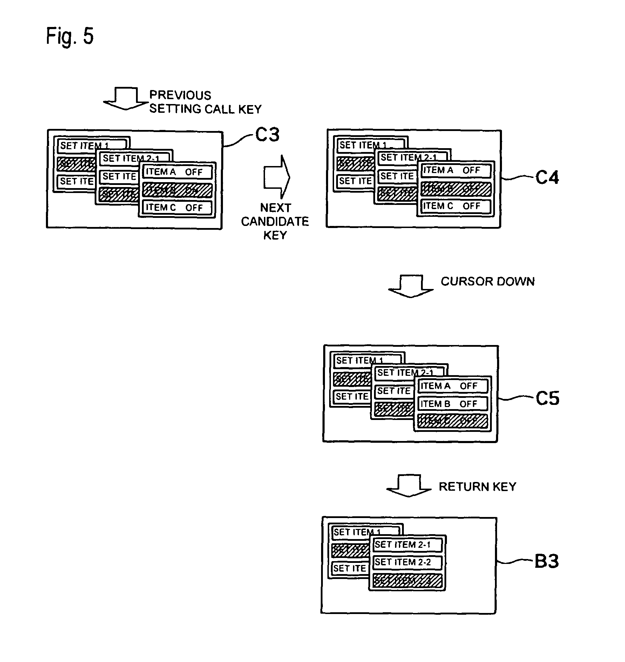

In relation to the example of the processings stated so far, a manner of a change of the screen display will be described with reference to Figs. 4 and 5.

Fig. 4 is an explanatory view that depicts the change of the menu screen during a setting processing using an ordinary setup menu.

As shown on a screen A1, three set items 1 to 3 are displayed as a result of depression of, for example, a "SETUP key", and a set item 1 is currently selected on the screen A1. In this state, when a down cursor movement is indicated, the screen A1 is changed to a screen A2 on which a set item 2 is selected.

In this state, when the "confirmation key" is depressed, then three selection items 2-1 to 2-3 in a lower layer appear, and the selection item 2-1 is selected by default as shown on a screen B1. If the down cursor movement is repeated twice, the screen is changed to a screen B2 and to a screen B3. On the screen B3, the set item 2-3 is selected. In this state, when the "confirmation key" is depressed, a menu in a further lower layer is displayed as shown on a screen C1. The screen C1 is an ON/OFF select screen for three items A, B, and C, and an item A OFF is selected by default on the screen C1.

When the cursor is moved downward, the screen C1 is changed to a screen C2 on which an item B OFF is selected. If the user wants to set this item B ON, the user depresses a "next candidate key" (by moving, for example, the cursor left or right), whereby an item B ON can be selected. To confirm this state, the "confirmation key" is depressed.

Meanwhile, Fig. 5 is an explanatory view that depicts a change of the menu screen when the "previously set item call key" characteristic of the present invention is operated. In Fig. 5, a processing performed when the "previously set item call key" is operated after the processing shown in Fig. 4 is explained.

The set item history storage unit 22 sequentially stores the series of key operation data (SETUP) → (Move the cursor down) → (ENTER) → (Move the cursor down) → (Move the cursor down) → (ENTER) → (Move the cursor down) → (Next candidate) → (ENTER). The pieces of data starting at the latest data can be sequentially read in the reverse chronological order.

When the "previously set item call key" is operated, the state is returned to the state in which the confirmation (ENTER) key has been finally depressed as stated before. Accordingly, the present set value data is fetched from the set value storage unit 21, and the key operation history until the latest "confirmation key" depression is fetched from the set item history storage unit 22, whereby the content of the menu at that point is reproduced.

In this example, therefore, the screen C3 shown in Fig. 4 is reproduced without settings in a higher layer of the menu. In this state, the item B is selected and an item B ON is, therefore, selected. By depressing the "next candidate key" (or moving the cursor left or right), a screen C4 on which an item B OFF is selected can be obtained as shown in Fig. 5.

In this state, by operating the cursor down, a screen C5 on which a set position is moved to a position of the item C can be obtained.

In this state, when the user wants to return to the set items in the higher layer, the "RETURN" key is depressed. By doing so, the key operation data since the latest "confirmation key" depression until the "confirmation key" depression just before the latest "confirmation key" depression is read in the reverse chronological order. If the reverse operation data of (Next candidate) → (Move the cursor down) → (ENTER) read in the reverse chronological order is applied to the present menu setting content read from the set value storage unit 21, the setting screen B3 shown in Fig. 4 can be obtained.

In the above-stated embodiment, the electronic apparatus is assumed as the DVD recorder. However, the present invention can be widely applied to any electronic apparatus including the hierarchical menu.

## Claims

1. A user interface of an electronic apparatus comprising:
a key discrimination unit that discriminates an input key;
a first storage unit that stores a latest screen display item;
a second storage unit that sequentially stores a series of operation keys with a "confirmation key" set as an index, and that reads the operation keys in a reverse chronological order;
an image control unit that displays a screen based on a storage content of said first storage unit; and
a management unit that, if said input key is a "previously set item call key", reads the series of operation keys up to a latest "confirmation key" depression from said second storage unit, and that causes said image control unit to display a screen at a time of the latest "confirmation key" depression as well as the storage content of said first storage unit.

2. The electronic apparatus user interface according to claim 1, wherein said second storage unit is a last-in first-out memory.

3. The electronic apparatus user interface according to claim 1 or 2, further comprising:
a graphic data storage unit that stores graphic data on a menu screen, wherein
said image control unit displays a graphic screen using a storage content of the graphic storage unit.

4. The electronic apparatus user interface according to claim 1 or 2, wherein
said second storage unit stores a state of a menu which is opened at the time of said "confirmation key" depression, and which includes cursor information, as well as said series of operation keys.

5. A method for controlling a user interface, the method comprising steps of:
discriminating an input key;
reading a latest screen display item from a first storage unit that stores the latest screen display item if the input key is a "previously set item call key";
reading a series of operation keys sequentially stored in a second storage unit with a "confirmation key" set as an index in a reverse chronological order; and
displaying a screen at a point of a last "confirmation key" depression based on data read from said first storage unit and said second storage unit.
